Europäisches Patentamt

European Patent Office

Office européen des brevets

(11) Publication number : **0 565 263 A1**

# (12) EUROPEAN PATENT APPLICATION

(21) Application number : 93302163.6

(22) Date of filing : 22.03.93

(51) Int. Cl.$^5$ : **H05B 1/02,** G05D 23/30

(30) Priority : **09.04.92 GB 9207786**

(43) Date of publication of application :
**13.10.93 Bulletin 93/41**

(84) Designated Contracting States :
**AT BE CH DE DK ES FR GB GR IT LI NL PT SE**

(71) Applicant : **Ceramaspeed Limited
Hadzor Hall Hadzor
Droitwich, Worcestershire WR9 7DJ (GB)**

(72) Inventor : **Higgins, George Anthony
5 Broadwaters Drive, Hagley
Stourbridge, West Midlands DY9 0JU (GB)**
Inventor : **Scott, Richard Charles
47 Farm Road Stourport-on-Severn
Worcestershire DY13 9DQ (GB)**

(74) Representative : **Jackson, Derek Charles
Derek Jackson Associates The Haven Plough
Road
Tibberton Droitwich Worcestershire WR9 7NQ
(GB)**

(54) Temperature-compensated load energising device.

(57) A device (D1, D2) for electrical connection to a voltage source (V) and an electrically resistive load (L) , for energising the load at a required duty cycle irrespective of the ambient temperature. The device incorporates a temperature-responsive switch (S) and electrical resistance heating means (R ; R1, R2) in thermo-conducting relationship with the switch, the switch being arranged for connecting and disconnecting the voltage source (V) to and from the load (L) and the heating means (R ; R1, R2) . The device (D1, D2) also incorporates an arrangement which includes means responsive to change in ambient temperature and which effects consequential adjustment of electrical power dissipated in the electrical resistance heating means (R ; R1, R2) when the device (D1, D2) is operating with the switch (S) in a closed state, so that a required duty cycle obtained at a predetermined ambient temperature is maintained, within acceptable limits, at an ambient temperature different from the predetermined ambient temperature.

FIG 2

EP 0 565 263 A1

This invention relates to a device for electrical connection to an electrically resistive load, such as a heater including at least one heating element, and a voltage source, for energising the load at a required duty cycle. By means of the device, the load is cyclically energised and de-energised. The proportion of the time period of each cycle during which the load is energised, relative to the total cycle time, is known as the duty cycle and may be expressed as a percentage of the total cycle time.

The device generally comprises a temperature-responsive switch, located in a thermo-conducting relationship with an electrical resistance heating means which is electrically connected to the load. The temperature-responsive switch is generally of bimetallic form, arranged to be interposed between the voltage source and the load. The electrical resistance heating means may take the form of a film resistance element.

Devices of this nature are known, for example being described in EP-A-0 272 696. Operation can be such that when the device is connected to the source and the load and the temperature-responsive switch is in a closed state, the load is energised. At the same time, the resistance heating means heats up as a result of the electrical power dissipated therein and the heat developed is conducted to the temperature-responsive switch. When the temperature-responsive switch reaches an upper specified temperature, the switch opens and the load and the resistance heating means become thereby disconnected from the voltage source. The resistance heating means and the switch then cool down and when the temperature-responsive switch reaches a lower specified temperature, the switch closes and the cycle begins again.

The power dissipated in the resistance heating means is usually selected to provide a particular duty cycle for the load, such that for a specific proportion of the cycle time (for example 50 percent) the load is switched on and for the remaining proportion of the cycle time it is switched off. However, with this form of device a disadvantage exists in that the duty cycle varies according to the level of the ambient temperature. After the temperature-responsive switch opens at the upper specified temperature, natural cooling takes place until the lower specified temperature is reached. If the ambient temperature rises, then the natural cooling process becomes slower. As a result the duty cycle changes whereby the 'off' period becomes longer. Furthermore, in this situation the 'on' period becomes shorter. For example, with a duty cycle designed at a specific ambient temperature to be 50 percent 'on' and 50 percent 'off', this may change to 30 percent 'on' and 70 percent 'off' at a higher ambient temperature.

This is disadvantageous for some applications, such as for example when the load comprises a heating element in an electric cooker and a specific switch setting on the cooker is expected to result in a constant power level. However, such a constant power level will not happen where the duty cycle decreases with increased ambient temperature.

It is an object of the present invention to overcome or minimise this disadvantage by providing a means whereby the duty cycle is maintained substantially the same over a range of operational ambient temperatures.

According to the present invention there is provided a device for electrical connection to a voltage source and an electrically resistive load, for energising the load at a required duty cycle, the device incorporating a temperature-responsive switch and electrical resistance heating means in thermo-conducting relationship with the switch, the switch being arranged for connecting and disconnecting the voltage source to and from the load and the heating means, the device being characterised by an arrangement which includes means responsive to change in ambient temperature and which effects consequential adjustment of electrical power dissipated in the electrical resistance heating means when the device is operating with the switch in a closed state, whereby a required duty cycle obtained at a predetermined ambient temperature is maintained, within acceptable limits, at an ambient temperature different from the predetermined ambient temperature.

By 'within acceptable limits' it is meant that the duty cycle at an ambient temperature different from the predetermined ambient temperature is preferably within ± 20 percent (more preferably still, within ± 10 percent) of the value specified for the duty cycle at the predetermined ambient temperature.

The means responsive to change in ambient temperature may comprise a temperature-sensitive electrical resistance device, such as a thermistor. The temperature-sensitive resistance device preferably has a temperature coefficient of resistance of positive sign, and may most suitably comprise a positive temperature coefficient (PTC) thermistor.

In a particular embodiment, the voltage source comprises an alternating current source and the said arrangement comprises a circuit incorporating the temperature-sensitive resistance device responsive to change in ambient temperature, the circuit having at least a part thereof electrically connected in series with the electrical resistance heating means and incorporating components selected and interconnected such that at an ambient temperature different from the predetermined ambient temperature the circuit operates to alter the electrical power dissipated in the electrical resistance heating means, whereby a duty cycle obtained at the predetermined ambient temperature is maintained, within acceptable limits, at the ambient temperature different from the predetermined ambient temperature.

The electrical power dissipation in the electrical resistance heating means will be increased or decreased according to whether the ambient temperature is respectively below or above the predetermined ambient temperature.

The components in the circuit arrangement may be suitably selected and arranged such that the power dissipation in the resistance heating means is adjusted according to the electrical resistance of the temperature-sensitive resistance device, which resistance is determined by the ambient temperature relative to the predetermined ambient temperature. Such adjustment of the power dissipation in the resistance heating means may conveniently be effected by phase control of the alternating current voltage supply to the resistance heating means. For this purpose the components incorporated in the circuit arrangement with the temperature-sensitive resistance device suitably include a capacitor, a diac and a triac, whereby the capacitor builds up a charge by way of the temperature-sensitive resistance device for triggering the diac, which diac discharges the capacitor and fires the triac to permit the passage of electrical current to the heating means.

The load is suitably arranged to be electrically connected in parallel with a series combination of the electrical resistance heating means and at least a part of the arrangement which includes the means responsive to change in ambient temperature.

The means responsive to change in ambient temperature, such as a thermistor, should be located as remotely as practicable from the electrical resistance heating means such that thermal influence from the resistance heating means is minimised.

The temperature-responsive switch in the device suitably comprises a bimetallic form of snap switch.

The electrical resistance heating means in thermo-conducting relationship with the temperature-responsive switch may comprise one or more electrical resistance components. When more than one resistance component is provided, this may effectively be obtained from a single resistance element having one or more electrically conducting tapping points along its length.

The one or more resistance components may conveniently comprise one or more film resistance elements supported on an electrically insulating substrate, in thermo-conducting relationship with the temperature-responsive switch. The temperature-responsive switch may be mounted on the substrate.

The provision of more than one resistance component in the electrical resistance heating means enables the device to be used in conjunction with switch means to selectively energise the load at more than one duty cycle, by appropriate selective energising of the resistance components. Ambient temperature compensation according to the invention will be effected at each selected duty cycle.

The device of the invention may be incorporated with a switch arrangement which is designed for controlling application of the voltage supply from the source to the load.

In one particular application of the device according to the invention, the electrical load comprises a heater for use in an electric cooker, for example a heater for use with a glass ceramic cooking plate in such a cooker. Such a heater may incorporate one or more heating elements and may be controlled by a switch. Such a switch may be a multiple-position switch, and used to connect the one or more elements in different series or parallel combinations as appropriate for each switch position. The switch may suitably be incorporated with the device of the invention.

The invention is now described by way of example with reference to the accompanying drawings, in which:

Figure 1 is a diagrammatic illustration of an embodiment of a device according to the invention connected to an electrical load and a voltage source;

Figure 2 is a diagrammatic illustration of a circuit arrangement incorporated with the device of Figure 1;

Figure 3 is a diagrammatic illustration of a further embodiment of a device according to the invention connected to an electrical load and a voltage source; and

Figure 4 is a top plan view of an electrical load embodied as a heater for use with a glass ceramic hob in an electric cooker and energisable by the device of Figure 3.

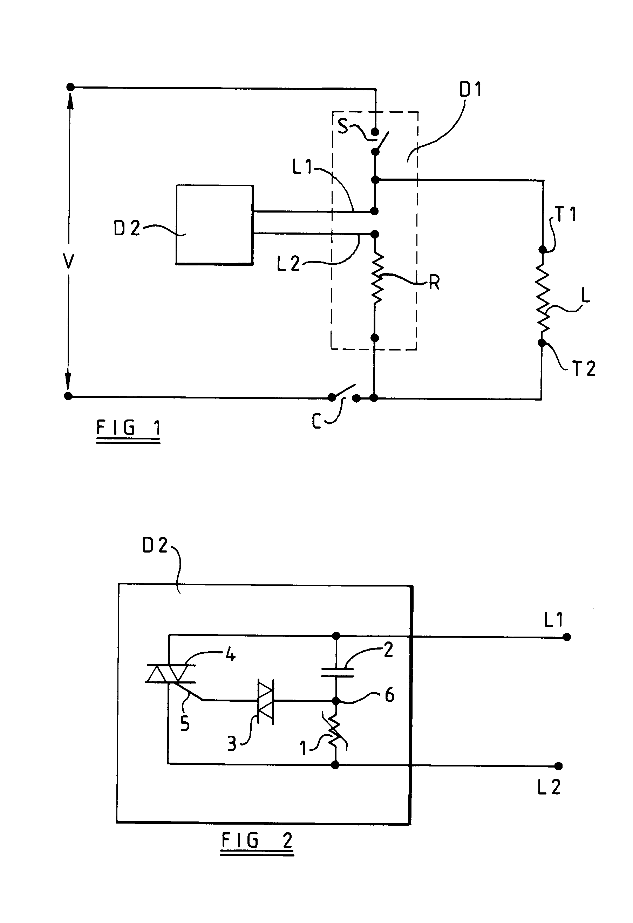

Referring to Figure 1, a device represented generally by two main portions D1 and D2 is arranged for electrical connection to an alternating current voltage source V and to terminals T1 and T2 of an electrically resistive load L. The load L may, for example, be a heater for use with a glass ceramic hob in an electric cooker.

Portion D1 of the device comprises an electrical resistance heating means R arranged in thermo-conducting relationship with a temperature-responsive bimetallic snap switch S, the snap switch S being arranged to open and close at specified upper and lower temperatures respectively. The resistance heating means R conveniently comprises a thick or thin film electrical resistance component on an electrically insulating ceramic substrate and the snap switch S is suitably also mounted on the substrate on the same or opposite side as the film resistance component. The resistance heating means R and snap switch S are electrically connected in series and to the voltage source V through the intermediary of a control switch C.

Portion D2 of the device, which will be described in detail later, is connected by leads L1 and L2 in series with the resistance heating means R and such that the load L is in parallel with the series combination of the resistance heating means R and the portion D2 of the device. However, to illustrate the invention consider first

of all a situation where portion D2 is not included and resistance heating means R is connected directly to snap switch S. When control switch C is closed, snap switch S is in a closed state and the load L is energised. Resistance heating means R heats up as a result of the electrical power dissipated therein and heat is transferred to the bimetallic snap switch S.

When the switch S reaches an upper specified temperature, it opens and the load L and the resistance heating means R become thereby disconnected from the voltage source V.

Natural cooling of the snap switch S and the resistance heating means R then occurs until a lower specified temperature is reached at which point the snap switch S closes and the load L and resistance heating means R are again energised.

The electrical resistance value of the resistance heating means R and the upper and lower operating temperatures of the snap switch S are selected to result in the load L being energised at a predetermined duty cycle. In each repeating cycle, the total time period is represented by a time period during which the load L is energised plus a time period during which the load L is de-energised. The duty cycle is the proportion of the total time period during which the load L is energised compared with the total time period and is conveniently expressed as a percentage. For example, if the load L is arranged to be energised for half of each total cycle time period, the duty cycle is 50 percent.

It is important for some applications that the duty cycle should be maintained within acceptable limits. For example, when the load L is a heater in a cooker, it is expected that when the control switch for the heater is set to a specific position, a constant power level will result. In practice, however, this may not occur. The duty cycle is, in fact, dependent upon the ambient temperature level.

It is found that if an appropriate duty cycle is selected at a predetermined ambient temperature, which is suitably the lowest temperature of the range of ambient temperatures over which the device is designed to be operated, then if the ambient temperature increases, the duty cycle decreases. At the higher ambient temperatures the snap switch S will heat up more quickly to the upper specified temperature and cool down more slowly to the lower specified temperature. This means, for example, that a duty cycle of 50 percent at a predetermined ambient temperature may decrease to perhaps 30 percent at a higher ambient temperature.

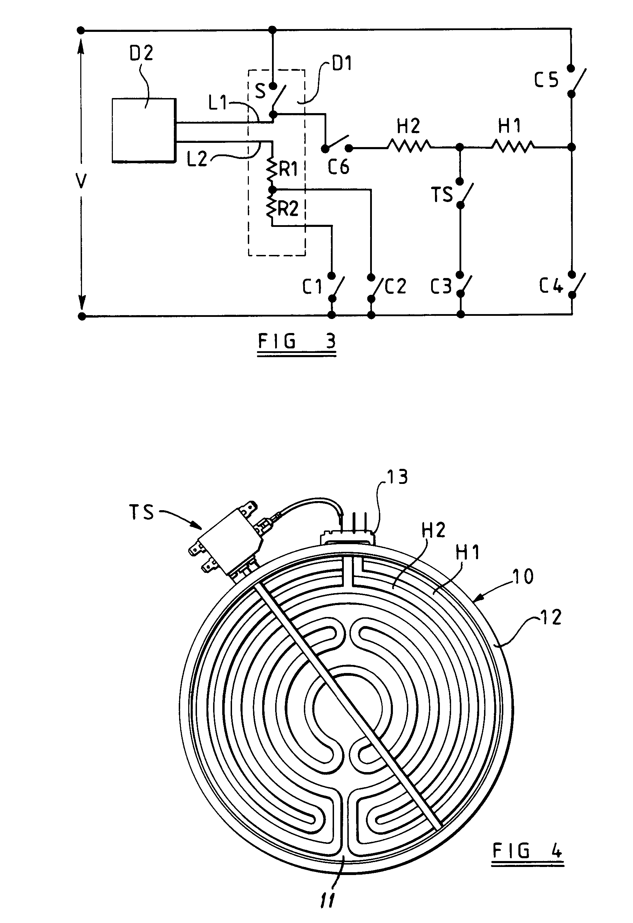

This problem is overcome by means of the portion D2 of the device which is connected by leads L1 and L2 in series with the resistance heating means R. Referring to Figure 2, portion D2 of the device comprises a circuit arrangement incorporating a temperature-sensitive electrical resistance device 1 whose electrical resistance increases with an increase in ambient temperature, a capacitor 2, a diac device 3 and a triac device 4.

The temperature-sensitive resistance device 1 suitably comprises a positive temperature coefficient of resistance (PTC) thermistor of suitably high temperature coefficient of resistance. The resulting arrangement of portion D2 is a phase control circuit which operates to appropriately reduce the conducting period of each half-cycle of the alternating voltage supply V to the electrical resistance heating means R as the ambient temperature rises above a predetermined level.

Firing of the triac 4 is dependent upon the application of current pulses to the gate 5 thereof. Such pulses occur as a result of discharge of capacitor 2 when the diac 3 triggers. Such triggering of the diac 3 typically occurs at a voltage of about 30 volts.

The capacitor 2 fulfils two functions. Firstly it provides a reservoir of electrical charge. Secondly, in association with the temperature-sensitive resistance device 1 a delay is introduced at the junction 6, which delays the application of current pulses to the gate 5 of the triac 4. This delay automatically increases as the resistance of the temperature-sensitive resistance device 1 increases with increase in ambient temperature.

As a result, the conducting period of each half-cycle of the alternating voltage supply V to the electrical resistance heating means R is automatically reduced by an amount appropriate to the increase in ambient temperature. The power dissipated in the electrical resistance heating means R is consequently automatically reduced as the ambient temperature increases and such that an appropriate increase occurs in the period of time that the resistance heating means R and the Load L are energised before the bimetallic snap switch S reaches its specified upper temperature and opens.

This increase in the energising time period is arranged to compensate for the increase in cooling time to the lower specified temperature of the snap switch which occurs as the ambient temperature increases and therefore the duty cycle is maintained substantially constant over a range of ambient temperatures in excess of the predetermined ambient temperature at which the duty cycle was originally selected.

It should be noted that with the introduction of the portion D2 of the device, it may be necessary to appropriately change the resistance value of the resistance heating means R.

The principles of phase control employed in the circuit arrangement of D2 are known and have been utilised for example in lamp dimming circuits with a manually-variable resistance device being used instead of the temperature-sensitive resistance device 1.

In practice, the temperature-sensitive resistance device 1 should be located sufficiently remotely from the electrical resistance heating means R in order to minimise the influence of the latter on the ambient temperature sensed by the resistance device 1.

The device of the invention, with its two portions D1 and D2, may conveniently be combined with control switch C used to control the application of the voltage supply V to the load L.

It is sometimes required to energise a load, such as a radiant heater used in a hob of an electric cooker, at more than one specified duty cycle. This can be effected, with ambient temperature compensation of each duty cycle, using an arrangement such as that shown in Figure 3. In Figure 3, a load in the form of the radiant heater shown in Figure 4, incorporating two heating elements H1 and H2 is energised from an alternating voltage source V through a device according to the invention comprising two portions D1 and D2.

Portion D2 is as shown in and previously described with reference to Figure 2 and portion D1 differs from the equivalent portion D1 shown in Figure 1 in that two electrical resistance heating means R1 and R2 connected in series replace the single resistance heating means R of Figure 1.

A multiple position switch having six sets of contacts C1, C2, C3, C4, C5 and C6, is provided and is suitably combined with the portions D1 and D2 of the device of the invention. Switch contact C2 when closed allows energising of resistance heating means R1 alone in the device D1.

Closure of switch contact C1, with C2 open, allows energising of a series combination of resistance heating means R1 and R2.

With resistance heating means R1 energised alone (C2 closed), and with switch contacts C4 and C6 also closed, the load in the form of heaters H1 and H2 connected in series is energised at a duty cycle which is lower than when a series combination of resistance heating means R1 and R2 is energised (C1 closed as well as C4 and C6). This is because less power is dissipated in the series combination of heating elements R1 and R2 when energised and snap switch S takes longer to open than when the element R1 is energised alone.

The portion D2 of the device of the invention co-operates with the portion D1 in exactly the same way as described with reference to Figures 1 and 2; the particular duty cycle, obtained according to whether switch contacts C1 or C2 are closed, being maintained substantially constant over a range of ambient temperatures in excess of the predetermined ambient temperature at which each of the two duty cycles was originally selected. (The predetermined ambient temperature again is defined as the lowest temperature in the range over which the switch is designed to be temperature compensated).

For convenience, the two electrical resistance heating means R1 and R2 comprise a single film electrical resistance element on a substrate and provided with a centre tapping point to define two components R1 and R2.

The multiple position switch with the six sets of contacts C1 to C6 provides for six heat settings of the heater of Figure 4 by means of the heating elements H1 and H2. The state of opening or closure of the various contacts according to the various switch positions is shown in Table 1:

| SWITCH POSITION | CONTACTS | | | | | |
|---|---|---|---|---|---|---|
| | C1 | C2 | C3 | C4 | C5 | C6 |
| 6 | | | X | | X | X |
| 5 | | | X | | X | |
| 4 | | | X | | | X |
| 3 | | | | X | | X |
| 2 | X | | | X | | X |
| 1 | | X | | X | | X |

X = CONTACT CLOSED

Table 1

In use, in switch position 6, which gives maximum heating power, the contacts C3, C5 and C6 are closed and the heating elements H1 and H2 are connected in parallel.

Switch position 5 gives somewhat reduced power, the contacts C3 and C5 being closed and only heating element H1 energised. In switch position 4, contacts C3 and C6 are closed and only heating element H2 is energised. Further reduction in heating power is obtained in switch position 3, with contacts C4 and C6 closed and heating elements H1 and H2 connected in series.

In switch position 2 also the contacts C4 and C6 are closed, but the heating elements H1 and H2, in series, are energised at the higher of the two available duty cycles as a result of contact C1 being closed. With contact C1 closed, resistance heating means R1 and R2 in the device D1 are energised in series. Switch position 1, which provides the lowest heating power, is as switch position 2 except that contact C2 is closed instead of contact C1. Resistance heating means R1 in the device D1 is energised alone and the heating elements H1 and H2 are energised at a lower duty cycle. In the switch positions 1 and 2 the combined arrangement of devices D1 and D2 according to the invention automatically maintain the selected duty cycle constant if the ambient temperature increases.

Figure 4 illustrates an example of a radiant heater for use with the arrangement of Figure 3.

Referring to Figure 4, a radiant electric heater has a container in the form of a metal dish 10 with an upstanding rim and containing a layer of electrical and thermal insulating material 11. This material is for example a microporous insulation which is compressed into the dish 10, and which comprises a highly-dispersed silica powder, such as silica aerogel or pyrogenic (fumed) silica, mixed with ceramic fibre reinforcement, titanium dioxide opacifier and a small quantity of alumina powder to resist shrinkage.

A ring-shaped wall 12 of ceramic fibre extends around the inside of the rim of the dish 10, on top of the layer 11 and protruding slightly above the edge of the rim. When installed in a glass ceramic top cooker, the wall 12 is pressed against the underside of a glass ceramic cooking surface, the heater being held in position by a spring or other mounting device (not shown). prior to installation, the wall 12 may be retained in position by staples (not shown) extending into the layer 11.

The layer 11 supports two coiled bare resistance-wire heating elements H1 and H2 (see also Figure 3) arranged in multiple concentric, generally circular portions. The coiled elements H1 and H2 are secured to the layer 11 by, for example, staples held by friction in the insulating material of the layer 11, or by gluing to the layer 11 or to stakes inserted therein. The ends of the heating element portions H1 and H2 are coupled to respective conductors in an electrical connector block 13 mounted at the edge of the dish 10.

As is customary with heaters for glass ceramic top cookers, a temperature sensitive rod limiter TS is provided with its probe extending across the heater. This probe typically comprises a fused silica tube containing a metal rod. A snap-action switch controlled by the probe is provided for connection in series with the heating elements H1 and H2 and the voltage supply, to prevent heating of the associated cooktop above its maximum safe temperature.

## Claims

1. A device (D1, D2) for electrical connection to a voltage source (V) and an electrically resistive load (L), for energising the load at a required duty cycle, the device incorporating a temperature-responsive switch (S) and electrical resistance heating means (R; R1, R2) in thermo-conducting relationship with the switch, the switch being arranged for connecting and disconnecting the voltage source to and from the load and the heating means, the device (D1, D2) being characterised by an arrangement which includes means (1) responsive to change in ambient temperature and which effects consequential adjustment of electrical power dissipated in the electrical resistance heating means (R; R1, R2) when the device (D1, D2) is operating with the switch (S) in a closed state, whereby a required duty cycle obtained at a predetermined ambient temperature is maintained, within acceptable limits, at an ambient temperature different from the predetermined ambient temperature.

2. A device according to claim 1, characterised in that the means responsive to change in ambient temperature comprises a temperature-sensitive electrical resistance device such as a thermistor (1).

3. A device according to claim 2, characterised in that the temperature-sensitive resistance device (1) has a temperature coefficient of resistance of positive sign.

4. A device according to claim 2 or 3, characterised in that the voltage source (V) comprises an alternating current source and the said arrangement comprises a circuit incorporating the temperature-sensitive resistance device (1) responsive to change in ambient temperature, the circuit having at least a part thereof electrically connected in series with the electrical resistance heating means (R; R1, R2) and incorporating components selected and interconnected such that at an ambient temperature different from the predetermined ambient temperature the circuit operates to alter the electrical power dissipated in the electrical resistance heating means (R; R1, R2), whereby a duty cycle obtained at the predetermined ambient temperature is maintained, within acceptable limits, at the ambient temperature different from the predetermined ambient temperature.

5. A device according to claim 4, characterised in that the components in the circuit arrangement are selected and arranged such that the power dissipation in the resistance heating means (R; R1, R2) is adjusted according to the electrical resistance of the temperature-sensitive resistance device (1), which resistance is determined by the ambient temperature relative to the predetermined ambient temperature.

6. A device according to claim 5, characterised in that the adjustment of the power dissipation in the resistance heating means (R; R1, R2) is effected by phase control of the alternating current voltage supply to the resistance heating means.

7. A device according to claim 6, characterised in that the components incorporated in the circuit arrangement with the temperature-sensitive resistance device (1) include a capacitor (2), a diac (3) and a triac (4), whereby the capacitor (2) builds up a charge by way of the temperature-sensitive resistance device (1) for triggering the diac (3), which diac discharges the capacitor and fires the triac (4) to permit the passage of electrical current to the heating means (R; R1, R2).

8. A device according to any one of the preceding claims, characterised in that the load (L) is arranged to be electrically connected in parallel with a series combination of the electrical resistance heating means (R; R1, R2) and at least a part of the arrangement which includes the means responsive to change in ambient temperature.

9. A device according to any one of the preceding claims, characterised in that the temperature-responsive switch (S) in the device (D1, D2) comprises a bimetallic form of snap switch.

10. A device according to any one of the preceding claims, characterised in that the electrical resistance heating means (R; R1, R2) in thermo-conducting relationship with the temperature-responsive switch (S) comprises one or more electrical resistance components.

11. A device according to claim 10, characterised in that more than one resistance component is provided, obtained from a single resistance element having one or more electrically conducting tapping points along its length.

12. A device according to claim 10 or 11, characterised in that the one or more resistance components comprise one or more film resistance elements supported on an electrically insulating substrate, on which substrate the temperature-responsive switch (S) can optionally be mounted.

13. A device according to any one of the preceding claims, characterised in that a switch arrangement (C; C1, C2, C3, C4, C5, C6) is provided for controlling application of the voltage supply from the source (V) to the load (L).

14. A device according to any one of the preceding claims, characterised in that the electrically resistive load (L) comprises a heater for use in an electric cooker.

15. A device according to claim 14, characterised in that the heater incorporates one or more heating elements (H1, H2) and is controlled by a switch such as a multiple-position switch (C1, C2, C3, C4, C5, C6), the switch optionally being incorporated with the device (D1, D2).

FIG 1

FIG 2

FIG 3

FIG 4

10

European Patent Office

**EUROPEAN SEARCH REPORT**

Application Number

EP    93 30 2163

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 254 838 (CHAMBERS) * column 3, lines 5 - 36; column 4, line 32 - column 6, line 17; column 6, line 74 - column 7, line 27; column 7, line 72 - column 9, line 17; figures 3, 5, 6 * | 1-6,9,10 | H05B1/02 G05D23/30 |
| X | GB-A-1 372 627 (DIMPLEX LIMITED) * whole document * | 1-5,8-10 | |
| A | DE-A-1 615 412 (SIEMENS-ELEKTROGERÄTE GMBH) * page 1, line 1 - page 2, line 15; page 3, line 16 - page 6, line 5; page 6, line 24 - page 8, line 19; figures 1, 3 * | 1-6,8-14 | |
| A | DE-C-2 050 428 (NOBOE FABRIKKER A/S) * whole document * | 1-5 | |
| A | SE-A-445 397 (SÖKANDE FRICO AB) * abstract; claims 1,2; figures 1 - 3 * | 1-5,9,10 | |
| A | DE-U-9 107 618 (CERAMASPEED LTD.) * page 4, lines 8 - 14; page 7, line 19 - page 10, line 30; figures 1, 2 * | 13-15 | TECHNICAL FIELDS SEARCHED (Int. Cl.5) H05B G05D H01H |
| A | EP-A-0 194 512 (E.G.O. ELEKTRO-GERÄTE BLANC U. FISCHER) * abstract; page 7, lines 10 - 31; claims 1 - 3 ; figures 1, 2, 5 * | 12 | |

The present search report has been drawn up for all claims

| Place of search | Date of completion of the search | Examiner |
|---|---|---|
| BERLIN | 29 JULY 1993 | BEITNER M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)